# EUROPÄISCHE PATENTANMELDUNG

(11) **EP 0 823 618 A1**
(43) Veröffentlichungstag der Anmeldung: **11.02.1998**
(21) Anmeldenummer: 97111086.1
(22) Anmeldetag: 03.07.1997
(51) Int. Cl.: G01D 5/165, F02D 11/10

(54) **Verfahren und Vorrichtung zur Erfassung der Position eines beweglichen Teiles**

(30) Priorität: 06.08.1996 DE 19631699
(71) Anmelder: VDO Adolf Schindling AG, 60326 Frankfurt/Main (DE)
(72) Erfinder: Köppler, Peter, 61118 Bad Vilbel (DE); Clemen, Uwe, 63477 Maintal 1 (DE)
(74) Vertreter: Klein, Thomas, Dipl.-Ing.

(57) **Zusammenfassung**

Verfahren zur Erfassung der Position eines beweglichen Teiles, insbesondere eines beweglichen Teiles in einem Kraftfahrzeug, bei dem mehrere Positionsaufnehmer die ihnen zugeordneten Bahnbereiche wenigstens teilweise bei Bewegung des Teiles überstreichen, wobei erfindungsgemäß vorgesehen ist, daß die Positionsaufnehmer weitestgehend gleiche Bahnbereiche überstreichen, wobei ein zumindest von einem Positionsaufnehmer abgegebenes Signal ein Maß für die Position des bewegbaren Teiles ist.

## Beschreibung

Die Erfindung betrifft ein Verfahren zur Erfassung der Position eines beweglichen Teiles sowie eine Positionserfassungseinrichtung gemäß den Merkmalen der beiden unabhängigen Patentansprüche.

Aus der DE 34 33 585 A1 ist ein Positionserfassungsorgan für ein bewegbares Teil in einem Kraftfahrzeug, insbesondere der Drosselklappe mit einem gemeinsamen Antrieb für mehrere Positionsaufnehmer und mehreren Bahnbereichen bekannt, bei dem die einzelnen Bahnbereiche über den Gesamtbereich hinweg wenigstens teilweise nacheinander durchlaufen werden, so daß die Bereitstellung eines Positionssignales mit unterschiedlicher Auflösung je nach Bereich möglich ist. Erreicht wird dies durch unterschiedlich im Gesamtbereich verteilte Einzelbereiche in Form von Widerstandsbahnen. Da dem Ausgangssignal eines jeden Positionsaufnehmers auch eine Funktion zugeordnet ist, ist es von Nachteil, da bei Beschädigung oder einem sonstigen Ausfall eines Bahnbereiches oder auch des dem Bahnbereich zugeordneten Schleifers kein Ausgangssignal mehr zur Verfügung steht, so daß die davon abhängige Funktion ausfällt, nicht durchgeführt werden kann oder aufgrund des fehlenden Ausgangssignals eine beliebige Funktion ausgeführt wird, die unter Umständen zu einer Gefahrensituation führen kann.

Der Erfindung liegt daher die Aufgabe zugrunde, ein Verfahren zur Erfassung der Position eines beweglichen Teiles sowie eine Positionserfassungseinrichtung bereitzustellen, die redundant aufgebaut ist, Sicherheitsanforderungen erfüllt sowie einfach in der Herstellung ist.

Diese Aufgabe ist durch die kennzeichnenden Merkmale der beiden unabhängigen Patentansprüche gelöst.

Dies hat den Vorteil, daß die Positionserfassungseinrichtung redundant ist, da zumindest zwei Bahnbereiche sich über den gleichen Winkel- oder Weg-bereich erstrecken und von dem gleichen Antrieb angetrieben werden, so daß zwei voll- und gleichwertige Signale zur Verfügung stehen. Die Bahnbereiche können nur auf einer Seite einer Trägerplatte (z.B. Oberseite), jedoch auch auf beiden Seiten der Trägerplatten (Ober- und Unterseite) aufgebracht sein. Sollte ein Positionsaufnehmer (beispielsweise der Bahnbereich oder der Schleifer) beschädigt werden oder aus einem anderen Grund ausfallen, steht immer noch ein zweiter Bahnbereich zur Abgabe eines vollwertigen Signales zur Verfügung. Weiterhin ist es von Vorteil, daß die beiden von den wenigstens zwei Positionsaufnehmern abgegebenen Signale zur Plausibilitätskontrolle herangezogen werden können. Damit ist es möglich, den Ausfall oder auch eine Fehlfunktion des Positionsaufnehmers frühzeitig zu erkennen und gegebenenfalls eine Notfunktion ausführen zu lassen oder die Regelfunktion in Abhängigkeit nur noch eines Signales eines Positionsaufnehmers ausführen zu lassen. In diesem Fall kann eine entsprechende Warnung (beispielsweise akustisch oder optisch) abgegeben werden.

Weiterhin ist es bei der Produktion der erfindungsgemäßen Positionserfassungseinrichtung von Vorteil, daß solche Einflüsse, die einen gleichsinnigen Winkel- bzw. Wegversatz auf den Bahnbereichen verursachen (z.B. Exzentrizitätsfehler oder Lagerspiel des Antriebes) in ihrer Auswirkung abgeschwächt und im Idealfall sogar kompensiert werden. Da die Bahnbereiche parallel in geringem Abstand zueinander angeordnet sind, können Grundtoleranzen bereits im Herstellungsprozeß verringert werden. Da auch die Schleifer (Schleiferfedern) der Positionsaufnehmer näher zueinander in einem gemeinsamen Schleiferträger angeordnet werden können, ist es weiterhin von Vorteil, die Ausrichtung der Schleifer zueinander in der Fertigung zu optimieren und damit auch diese Toleranz zu verringern.

Weitere Ausgestaltungen des erfindungsgemäßen Verfahrens sowie eine konstuktive Ausgestaltung einer erfindungsgemäßen Positionserfassungseinrichtung sind im folgenden beschrieben und anhand der Figuren erläutert. Es zeigen:
- Figur 1:: eine Positionserfassungseinrichtung in der Draufsicht,
- Figur 2:: einen Schnitt durch die Positionserfassungseinrichtung,
- Figuren 3 bis 6:: Darstellungen eines Positionsaufnehmers,
- Figur 7:: eine Auswerteeinrichtung,
- Figur 8:: Summen- bzw. Differenzbildung bei der Plausibilitätskontrolle.

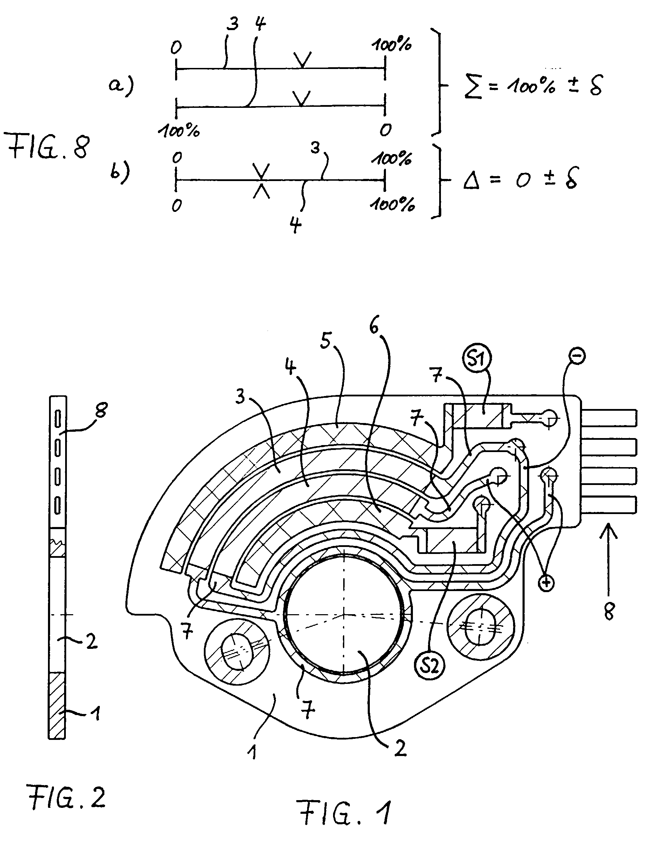

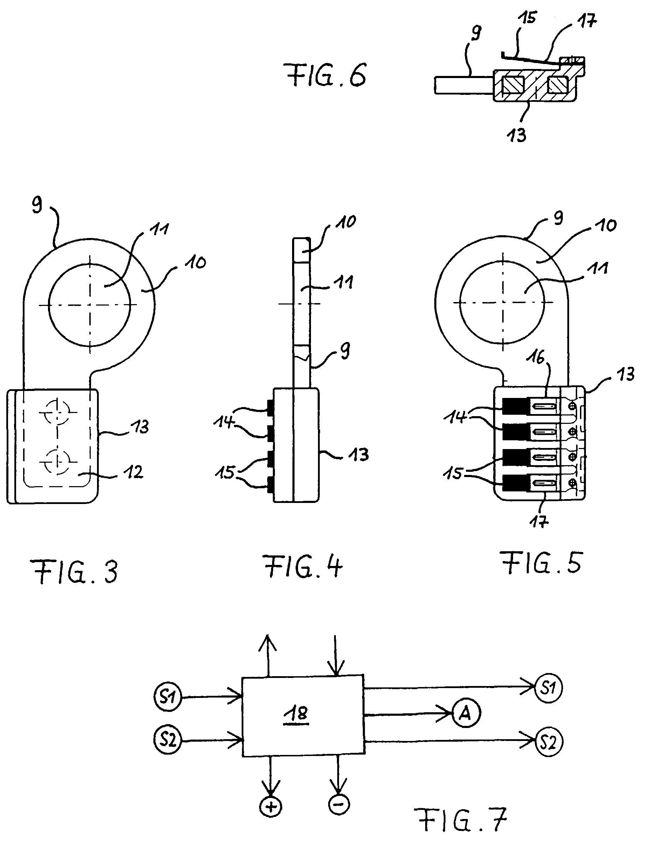

Figur 1 zeigt eine Positionserfassungseinrichtung in der Draufsicht. Eine Trägerplatte 1 (Leiterplatte) weist eine Bohrung 2 beispielsweise zur Durchführung einer Welle für den gemeinsamen Antrieb auf. Mit den Bezugsziffern 3 und 4 sind Widerstandsbahnen und mit den Bezugsziffern 5 und 6 Schleiferbahnen bezeichnet. Die in Figur 1 gezeigte Anordnung von Widerstands-bahnen 3, 4 und Schleiferbahnen 5, 6 ist beispielhaft, wobei auch beispielsweise die Widerstandsbahnen und die Schleiferbahnen in ihrer Anordnung vertauscht werden können. Wesentlich ist, daß sich die mehreren Bahnbereiche (Widerstandsbahnen 3, 4 und Schleiferbahnen 5, 6 und gegebenenfalls weitere Bahnen) über den annähernd gleichen Winkel- bzw. Wegbereich erstrecken, insbesondere konzentrisch um die Bohrung 2 herum; d.h. zu der Widerstandsbahn 3 ist immer konzentrisch (bzw. parallel) die Widerstandsbahn 4 mit den zugehörigen Schleiferbahnen 5 und 6 angeordnet. Über weitere Leiterbahnen 7 sind die Widerstandsbahnen 3, 4 und die Schleiferbahnen 5, 6 entsprechend den konstruktiven Ausführungen der Trägerplatte 1 (beispielsweise auch unter Berücksichtigung von Bohrungen, die zur Befestigung der Trägerplatte 1 dienen) in einen Bereich geführt, in dem ein Anschluß (beispielsweise Kontaktfinger 8) vorhanden ist. Denkbar ist auch, daß anstelle eines Steckers an den Leiterbahnen 7 Verbindungsleitungen angelötet oder in sonstiger Weise befestigt sind. Am Ende jeder Widerstandsbahn 3, 4 liegt unterschiedliches Potential (plus oder minus) an, wobei an den beiden benachbarten Enden jeder Widerstandsbahn 3, 4 gleiches oder entgegengesetztes Potential anliegt. Damit sind die Steigungen (Ausgangssignale) der Widerstandsbahnen 3, 4 bei gleicher Überfahrrichtung gegenläufig oder gleichläufig. Die Signale der Widerstandsbahnen 3, 4 werden über Komponenten eines beweglichen Abgriffes (siehe Figuren 3 bis 6) auf die Schleiferbahnen 5 bzw. 6 übertragen, so daß an diesen Schleiferbahnen 5, 6 jeweils zwei vollwertige Signale S1 und S2 zur Verfügung stehen, die ebenfalls über die Kontaktfinger 8 abgreifbar sind.

Figur 2 Zeigt einen Schnitt durch die Positionserfassungseinrichtung, wodurch der flache Aufbau verdeutlicht wird, der insbesondere bei einem knappen Raumangebot von Vorteil ist.

Die Figuren 3 bis 6 zeigen Darstellungen eines Positionsaufnehmers, wobei in Figur 3 ein beweglicher Abgriff 9 dargestellt ist, der einenends einen runden Abschnitt 10 aufweist, mit dem der bewegliche Abgriff 9 auf einer Welle 11 (beispielsweise einer Drosselklappenwelle) drehfest angeordnet ist. Anderenends ist ein länglicher Abschnitt 12 vorgesehen, der einen Zwischenträger 13 aufweist. Der Zwischenträger 13 kann fest auf dem länglichen Abschnitt 12 angeordnet werden, einstückig mit dem länglichen Abschnitt 12 ausgebildet sein oder auch zur Justage bewegbar mit dem länglichen Abschnitt 12 verbunden sein (beispielsweise durch Verschraubung). Denkbar ist auch, den Zwischenträger 13 nach der Justage mit dem länglichen Ab-schnitt 12 zu verkleben oder dergleichen.

In Figur 4 ist gezeigt, daß der Zwischenträger 13 jeweils ein Schleiferfingerpaar 14 und 15 aufweist, wobei jeweils ein Schleiferfingerpaar eine Widerstandsbahn und eine Schleiferbahn (3, 5 und 4, 6) überbrückt.

Figur 5 zeigt die Unterseite des Zwischenträgers 13, wo erkennbar ist, daß die Schleiferfingerpaare 14 und 15 über Schleiferfingerträger 16 und 17 untereinander verbunden sind und mittels dieser Schleiferfingerträger 16 elektrisch isoliert gegenüber dem Zwischenträger 13 bzw. dem beweglichen Ab-griff 9 auf dem Zwischenträger 13 angeordnet sind (beispielsweise durch Vernieten). Die Schleifeningerpaare 14 und 15 sind ausgehend von dem Drehpunkt um die Welle 11 (bzw. der Bohrung 2) hintereinander auf einer Linie angeordnet.

Figur 6 zeigt einen Schnitt durch den Zwischenträger 13, wobei erkennbar ist, daß die Schleiferfingerpaare 14 und 15 einschließlich ihrer Schleiferfingerträger 16 und 17 abgewinkelt von der Oberfläche des Zwischenträgers 13 angeordnet sind. Dies hat den Zweck, daß die Schleiferfingerpaare 14 und 15 nach Montage des beweglichen Abgriffes 9 auf der Welle 11 und dann parallel zu der Trägerplatte 1 unter Federwirkung auf die Widerstandsbahnen 3, 4 und die Schleiferbahnen 5, 6 drücken. Bezüglich der Ausgestaltung des beweglichen Abgriffes 9, wie er in den Figuren 3 bis 6 gezeigt ist, wird auf das deutsche Gebrauchsmuster G 91 14 407.8 verwiesen, wobei die Ausgestaltung eines solchen beweglichen Abgriffes in den Figuren 1 und 2 nebst zugehöriger Figurenbeschreibung des deutschen Gebrauchsmusters beschrieben ist. Dabei ist die konstruktive Ausführung des beweglichen Abgriffes nicht auf diese Ausführungsform beschränkt, sondern es sind sämtliche Ausführungsformen einsetzbar, die die gleiche Funktion erfüllen. Darüber hinaus kann sich die Erfindung auch selbstverständlich auf Ausgestaltungen beziehen, bei denen die Widerstandsbahnen und die Schleiferbahnen als Geraden ausgeführt sind und der bewegliche Abgriff keine Drehbewegung, sondern eine Linearbewegung ausführt.

Figur 7 zeigt eine Auswerteeinrichtung 18, wobei der Auswerteeinrichtung 18 die beiden Signale S1 und S2 zugeführt werden. Gleichzeitig stellt die Auswerteeinrichtung 18 das Potential (plus und minus oder Masse) zur Verfügung. Es ist denkbar, daß die Auswerteeinrichtung 18 getrennt oder in Baueinheit mit der Trägerplatte 1 angeordnet ist. Die Anordnung in Baueinheit mit der Trägerplatte 1 hat den Vorteil, daß eine aktive Positionserfassungseinrichtung zur Verfügung steht, wobei dann an einem Ausgang A der Auswerteeinrichtung 18 ein Ausgangssignal, dessen Erzeugung noch beschrieben wird, zur Verfügung steht. Die getrennte Anordnung der Auswerteeinrichtung 18 von der Trägerplatte 1 hat den Vorteil, daß die Auswerteeinrichtung 18 in weiteren Steuer- oder Regeleinrichtungen integrierbar ist und die Kompaktheit der Positionserfassungseinrichtung gewährleistet ist. In Figur 7 ist durch die Eingangs- und Ausgangspfeile an der Auswerteeinrichtung 18 noch angedeutet, daß dieser weitere Signale zugeführt werden können (beispielsweise ein Temperatursignal zur Temperaturkompensation) und diese auch weitere Ausgangssignale (wie beispielsweise die beiden Signale S1 und S2) abgeben kann.

Figur 8 zeigt eine Summen- bzw. Differenzbildung bei der Plausibilitätskontrolle. In Figur 8a ist gezeigt, daß bei gleicher Überfahrrichtung mittels der Schleiferfingerpaare 14 und 15 die Steigungen der Widerstandsbahnen 3 und 4 gegenläufig sind, d.h., daß an deren zugeordneten Enden unterschiedliches Potential liegt. Da die Steigungen gegenläufig sind, erfolgt eine Plausibilitätskontrolle (Bestimmung der Gleichlaufgüte) durch eine Addition der beiden Signale S1 und S2, wobei die Summe der Signale S1 und S2 (bei einem Wertebereich jedes einzelnen Signales von 0 bis 100% bzw. von 100% bis 0) 100% (einschließlich einer gewissen und zulässigen Toleranz) ergeben muß. Hat die Addition 100% ergeben, wird von der Auswerteeinrichtung 18 zumindest eines der beiden Signale S1 oder S2 abgegeben, um die nachfolgende Funktion zu steuern oder zu regeln. Für den Fall, daß die Plausibilitätskontrolle negativ ausgefallen ist, kann ein entsprechendes einen Fehler darstellendes Ausgangssignal abgegeben werden. Dieses Signal A kann beispielsweise zur optischen und/oder akustischen Anzeige gebracht werden oder auch in einer On-Board-Diagnoseeinrichtung gespeichert werden.

Figur 8b zeigt die Plausibilitätskontrolle, bei der die Steigungen der Widerstandsbahnen 3, 4 gleichläufig sind und die beiden Signale S1 und S2 voneinander subtrahiert werden. Die Plausibilitätskontrolle fällt dann positiv aus, wenn die Differenz gleich 0 (einschließlich einer zulässigen Toleranz) ist. Fällt die Plausibilitätskontrolle negativ aus, ist die gleiche Vorgehensweise wie zu Figur 8a beschrieben anwendbar.

Ein bevorzugtes Einsatzgebiet der erfindungsgemäßen Positionserfassungseinrichtung ist das Erfassen der Stellung einer in einem Drosselklappenstutzen angeordneten Drosselklappe oder eines Pedales, insbesondere eines Gaspedales eines Fahrzeuges (Pedalwertgeber), wobei sich die Erfindung jedoch nicht auf dieses Einsatzgebiet beschränkt, sondern sich überall dort einsetzen läßt, wo eine Positionserfassung mit Redundanz erfolgen soll.

## Patentansprüche

1. Verfahren zur Erfassung der Position eines beweglichen Teiles, insbesondere eines beweglichen Teiles in einem Kraftfahrzeug, bei dem mehrere Positionsaufnehmer die ihnen zugeordneten Bahnbereiche wenigstens teilweise bei Bewegung des Teiles überstreichen, dadurch gekennzeichnet, daß die Positionsaufnehmer weitestgehend gleiche Bahnbereiche überstreichen, wobei ein zumindest von einem Positionsaufnehmer abgegebenes Signal ein Maß für die Position des bewegbaren Teiles ist.

2. Verfahren nach Anspruch 1, dadurch gekennzeichnet, daß die Signale von wenigstens zwei Positionsaufnehmern zur Plausibilitätskontrolle der Signale ausgewertet werden.

3. Verfahren nach Anspruch 1 oder 2, dadurch gekennzeichnet, daß erst die Plausibilitätskontrolle durchgeführt und danach das Signal des einen Positionsaufnehmers zur weiteren Verarbeitung freigegeben wird.

4. Positionserfassungseinrichtung für ein bewegbares Teil, insbesondere ein bewegbares Teil in einem Kraftfahrzeug, mit einem gemeinsamen Antrieb für mehrere Positionsaufnehmer und mit mehreren Bahnbereichen, dadurch gekennzeichnet, daß sich die mehreren Bahnbereiche über den gleichen Winkel- oder Wegbereich erstrecken und ein von einem Positionsaufnehmer abgegebenes Signal ein Maß für die Position des bewegbaren Teiles ist.

5. Positionserfassungseinrichtung nach Anspruch 4, dadurch gekennzeichnet, daß die Positionsaufnehmer elektrisch mit einer Auswerteeinrichtung 18 verschaltet sind, wobei die Auswerteeinrichtung 18 zumindest in Abhängigkeit der Signale der Positionsaufnehmer ein Plausibilitätssignal erzeugt.

6. Positionserfassungseinrichtung nach Anspruch 4 oder 5, dadurch gekennzeichnet, daß die Bahnbereiche konzentrisch um einen Drehpunkt angeordnet sind sowie Widerstandsbahnen (3, 4 ) und den Widerstandsbahnen (3, 4) zugehörige Schleiferbahnen (5, 6) aufweisen.

7. Positionserfassungseinrichtung nach Anspruch 6, dadurch gekennzeichnet, daß an den benachbarten Enden der Widerstandsbahnen (3, 4) jeweils gleiches Potential (plus, minus) anliegt und die von den Positionsaufnehmern abgegebenen Signale voneinander subtrahiert werden, wobei das Ergebnis der Subtraktion das Plausibilitätssignal ist.

8. Positionserfassungseinrichtung nach Anspruch 6, dadurch gekennzeichnet, daß an den benachbarten Enden der Widerstandsbahnen (3, 4) jeweils unterschiedliches Potential (plus, minus) anliegt und die von Positionsaufnehmern abgegebenen Signale addiert werden, wobei das Ergebnis der Addition das Plausibilitätssignal ist.
